# EUROPÄISCHE PATENTSCHRIFT

(11) **EP 3 703 022 B1**
(45) Veröffentlichungstag und Bekanntmachung des Hinweises auf die Patenterteilung: **29.05.2024**
(21) Anmeldenummer: 19160182.2
(22) Anmeldetag: 01.03.2019
(51) Int. Cl.: G06Q 20/18, G07F 19/00

(54) **ANORDNUNG ZUM SICHEREN VERSCHLIESSEN EINES KOPFMODULS EINER VORRICHTUNG ZUR HANDHABUNG VON WERTSCHEINEN**
ASSEMBLY FOR SECURE CLOSING OF A TOPSIDE MODULE OF A DEVICE FOR HANDLING VOUCHERS
AGENCEMENT PERMETTANT DE SÉCURISER LA FERMETURE D'UN MODULE DE TÊTE D'UN DISPOSITIF DE MANIPULATION DES PAPIERS FIDUCIAIRES

(43) Veröffentlichungstag der Anmeldung: 02.09.2020
(73) Patentinhaber: Diebold Nixdorf Systems GmbH, 33106 Paderborn (DE)
(72) Erfinder: Kurylak, Bohdan, 33106 Paderborn (DE); Kujat, Erich, 33104 Paderborn (DE)

(56) Entgegenhaltungen:
- EP-A1- 2 211 314
- EP-A1- 2 631 879
- EP-B1- 1 263 010
- WO-A1-01/33523
- DE-A1-102017 101 732
- JP-A- H0 334 092
- JP-A- 2006 185 069
- JP-A- 2011 028 315
- JP-A- 2013 228 893
- US-A- 6 082 616
- US-A1- 2003 132 288
- US-A1- 2004 149 818
- US-A1- 2005 088 279
- US-A1- 2007 108 267
- US-B1- 8 844 807

## Beschreibung

Die Erfindung betrifft eine Anordnung zum sicheren Verschließen eines Kopfmoduls einer Vorrichtung zur Handhabung von Wertscheinen. Die Anordnung umfasst mindestens ein Kopfmodul, das zumindest einen Rahmen und eine Frontblende umfasst. Ferner umfasst die Anordnung mindestens eine Sensoreinheit zur Ausgabe eines Steuersignals, eine Authentifizierungseinheit zum Ermitteln von Authentifizierungsinformationen und eine Steuereinheit.

Die Anzahl von Sprengungen von Vorrichtungen zur Handhabung von Wertscheinen, insbesondere von Geldautomaten, nimmt seit dem Jahr 2013 deutlich zu. Die durch die Sprengungen verursachte Schadenshöhe übersteigt in vielen Fällen deutlich den Wert der erlangten Beute, in Einzelfällen kommt es zu Sachschäden in Millionenhöhe. Bei einer Sprengung werden üblicherweise die Frontblenden der Geldautomaten aufgebrochen, ein zündfähiges Gemisch, zum Beispiel Luft mit Propangas oder Luft mit Acetylen wird in das Tresormodul geleitet und zur Explosion gebracht. Alternativ werden auch feste Sprengstoffe oder Pyrotechnik verwendet.

Aus dem Stand der Technik sind Abwehrmaßnahmen bekannt, bei denen als Diebstahlsicherung sogenannte Farbbomben eingesetzt werden. Bei einer nicht befugten Öffnung des Tresormoduls wird die Farbbombe derart ausgelöst, dass der Wertscheininhalt durch Farbe unbrauchbar für die Täter gemacht wird. Diese Maßnahmen haben allerdings den Nachteil, dass die Sprengung selbst und die damit verbundenen Schäden und Gefahren nicht vermieden werden.

Dokument EP 2 211 314 B1 offenbart einen Geldautomaten, bei dem ein Kopfmodulschloss zum sicheren Verschließen des Kopfmoduls vorgesehen ist. Dieses Schloss ist ein mechanisches Schloss, dass mit einem Schlüssel betätigt wird. Zur Öffnung des Kopfmoduls kann insbesondere ein die vordere Gehäuseseite des Kopfmoduls bildendes Bedienfeld verschwenkt werden.

Dokument JP-H03-34092 offenbart die selektive Freigabe eines Verriegelungsmechanismus, wobei für jede Bedienperson ein entsprechender Code für eine Karte definiert ist und der Bediener mit einer persönlichen Identifikationsnummer versehen ist. Bei der Eingabe dieser Informationen durch einen Benutzer wird der Verriegelungsmechanismus selektiv freigegeben.

Dokument DE 10 2017 101 732 A1 offenbart ein Schließsystem zum Öffnen und Schließen des Korpus eines Automaten. Das Schließsystem ist ein elektronisches Schließsystem, das mit einem elektronischen Schlüssel auf einem mobilen Datenträger, wie einer RFID Karte oder einem Code auf dem Handydisplay usw., betätigt werden kann.

Dokument JP 2006-185069 offenbart einen Tresor, der zum rechtmäßigen Öffnen der Tresortür erfordert, eine PIN- Nummer in ein elektronisches Schloss einzugeben. Zusätzlich wird ein Schlüssel in ein Zylinderschloss eingeführt. Durch ein Einstecken des Schlüssels und dessen Drehung entriegelt die Steuereinheit die Sensoren, die im Verriegelungszustand des Tresors Manipulationen detektieren.

Dokument US 6,082,616 A1 offenbart ein mechanisch betätigbares Verriegelungselement, das mit einem stabförmigen Verriegelungselement im verriegelten Zustand in Eingriff steht.

Dokument EP 2 631 879 A1 offenbart einen Geldautomaten, bei dem zum Verschließen des Gehäuses des Geldautomaten ein elektromechanisches Schloss zum Schließen und Sichern der Außentüre gegenüber dem Gehäuse vorgesehen ist.

Dokument JP 2011 028315 A offenbart eine Vorrichtung zum Speichern von Banknoten, bei der eine Ausgabeöffnung zur Ausgabe der Banknoten vorhanden ist. Die Ausgabeöffnung kann durch eine Tür verschlossen werden, die mit Hilfe eines mechanischen Schlosses und eines elektronischen Schlüssels verriegelt werden kann.

Dokument US 2005/088279 A1 offenbart einen Verkaufsautomaten mit einem programmierbaren elektronischen Schloss und mit einem Schlüsselcode eines elektronischen Schlüssels. Das elektronische Schloss hat eine bei geöffneter Tür des Automaten zugängliche Vorrichtung zur Aktivierung eines Lernprozesses.

Es ist Aufgabe der Erfindung, eine Anordnung zum sicheren Verschließen einer Kopfeinheit einer Vorrichtung zur Handhabung von Wertscheinen anzugeben, die ein unerlaubtes Öffnen der Vorrichtung verhindert und dadurch ein besonders hohes Maß an Sicherheit vor Sprengung und Diebstahl ermöglicht.

Diese Aufgabe wird durch die Anordnung mit den Merkmalen des unabhängigen Anspruchs gelöst. Vorteilhafte Weiterbildungen sind in den abhängigen Ansprüchen angegeben.

Die Anordnung umfasst mindestens ein mechanisch betätigbares Verriegelungselement, wobei die Frontblende nur bei einer Entriegelung des mindestens einen mechanisch betätigbaren Verriegelungselements und der mindestens einen elektromechanischen Verriegelungseinheit relativ zum Rahmen verschwenkbar oder von dem Rahmen entfernbar oder mittels Teleskopschienen horizontal und/oder vertikal relativ zum Rahmen verschiebbar ist. Somit wird erreicht, dass eine Manipulation, insbesondere ein Aufbrechen der Frontblende, erheblich erschwert ist.

Mindestens ein stabförmiges Verriegelungselement ist an einer festen Position im Kopfmodul angeordnet und steht im Verriegelungszustand mit dem mechanisch betätigbaren Verriegelungselement in Eingriff. Dadurch wird ein Verschwenken der Frontblende um eine Schwenkachse oder ein Entfernen der Frontblende oder ein horizontales und/oder vertikales Verschieben der Frontblende relativ zum Rahmen verhindert.

Besonders vorteilhaft ist es, wenn die Steuereinheit ausgebildet ist, ausgehend von den Authentifizierungsinformationen die Berechtigung eines Benutzers zum Öffnen der Frontblende zu ermitteln. Dadurch wird erreicht, dass die Frontblende bei Fehlschlagen der Authentifizierung im Verriegelungszustand verbleibt.

Bei einer vorteilhaften Ausführungsform, die nicht in den Umfang der beigefügten Ansprüche fällt, umfasst die Sensoreinheit ein Schloss und einen elektrischen Schalter, wobei der elektrische Schalter derart ausgebildet und angeordnet ist, dass er beim Betätigen des Schlosses mit Hilfe eines Schlüssels das Steuersignal erzeugt. Dadurch wird eine besonders einfache und zuverlässige Erzeugung des Steuersignals erreicht.

Es ist ferner vorteilhaft, wenn beim Betätigen des Schlosses mit Hilfe des Schlüssels der Eingriff des stabförmigen Verriegelungselements mit dem mechanisch betätigbaren Verriegelungselement gelöst wird. Dadurch wird ein besonders einfaches Entriegeln der mechanisch betätigbaren Verriegelungselemente und ein kompakter Aufbau der Anordnung erreicht.

Bei einer vorteilhaften Ausführungsform, die nicht in den Umfang der beigefügten Ansprüche fällt, hat die elektromechanische Verriegelungseinheit eine manuell betätigbare Notentriegelung, die mit Hilfe eines mechanischen Betätigungselements betätigbar ist, wobei das mechanische Betätigungselement vorzugsweise einen Betätigungsdraht oder einen Betätigungsseilzug umfasst, dessen eines Ende mit der elektromechanischen Verriegelungseinheit gekoppelt ist und dessen anderes Ende in ein weiteres Modul der Vorrichtung zur Handhabung von Wertscheinen, vorzugsweise in ein Tresormodul, geführt ist, wobei das mechanische Betätigungselement im weiteren Modul nur über eine Öffnung im weiteren Modul für einen berechtigten Benutzer zugänglich ist. Dadurch wird sichergestellt, dass eine Betätigung der Notentriegelung im Falle eines unberechtigten Zugriffs auf das Kopfmodul nicht durch den unbefugten Dritten durchgeführt werden kann.

Die Sensoreinheit ist ferner ausgebildet, das Öffnen einer Tür des Kopfmoduls zu detektieren und ausgehend von der Detektion des Öffnens der Tür das Steuersignal auszugeben und an die Steuereinheit zu übermitteln. Dadurch wird ein besonders einfacher Aufbau der Anordnung erreicht, der sich insbesondere für Outdoor-Systeme eignet, bei denen der Zugang "Through-the-Wall" erfolgt, das heißt für Geldautomaten, die in einer Öffnung einer Außenwand oder einer Fensterfront eingebaut sind. Bei diesen Geldautomaten sind die Bedieneinheit und/oder die Frontblende durch die Öffnung erreichbar, während das Tresormodul in der Regel von hinten, das heißt von der der Frontblende entgegengesetzten Seite, nur für die berechtigten Benutzer zugänglich ist.

Es ist vorteilhaft, wenn bei einer Betätigung des mechanisch betätigbaren Verriegelungselements mit einem Entriegelungsmechanismus der Eingriff des stabförmigen Verriegelungselements mit dem mechanisch betätigbaren Verriegelungselement gelöst wird, wobei der Entriegelungsmechanismus nur bei geöffneter Tür des Kopfmoduls für einen berechtigten Benutzer zugänglich ist. Dadurch wird eine Entriegelung der mechanisch betätigbaren Verriegelungselemente durch Manipulationen an der Vorderseite der Vorrichtung, das heißt an der Frontblendenseite, verhindert.

Ferner ist es vorteilhaft, wenn die elektromechanische Verriegelungseinheit eine manuell betätigbare Notentriegelung hat, die mit Hilfe eines Entriegelungswerkzeuges betätigbar ist, wobei eine Betätigung der Notentriegelung nur bei geöffneter Tür des Kopfmoduls möglich ist. Dadurch wird einer Notentriegelung durch unbefugte Dritte wirksam entgegengewirkt.

Bei einer vorteilhaften Ausführungsform umfasst das Kopfmodul eine erste mit der Frontblende oder mit dem Rahmen fest verbundene elektromechanische Verriegelungseinheit und eine zweite mit der Frontblende oder mit dem Rahmen fest verbundene elektromechanisches Verriegelungseinheit, wobei die zweite elektromechanische Verriegelungseinheit an einer der ersten elektromechanischen Verriegelungseinheit gegenüberliegenden Seite des Rahmens oder der Frontblende angeordnet ist. Dadurch wird eine besonders hohe Sicherheit gegen den Aufbruch der Vorrichtung erreicht.

Ferner ist es vorteilhaft in einer nicht beanspruchten Ausführungsform, wenndie mechanisch betätigbare Verriegelungseinheit einen Schalter zur Ausgabe eines Schaltsignals umfasst, wenn die Steuereinheit ausgebildet ist, das Schaltsignal zu detektieren, und wenn die Steuereinheit ausgebildet ist, die elektromechanische Verriegelungseinheit derart anzusteuern, dass eine Änderung der elektromechanischen Verriegelungseinheit von dem Entriegelungszustand in den Verrieglungszustand bei Detektion des Schaltsignals und bei Verifizierung der Authentifizierungsinformationen erfolgt. Dadurch wird ein besonders kompakter, sicherer und einfacher Aufbau der Anordnung erreicht.

Es ist besonders vorteilhaft, wenn der Rahmen des Kopfmoduls in einem Gehäuse des Kopfmoduls integriert ist oder wenn der Rahmen des Kopfmoduls von dem Gehäuse des Kopfmoduls umgegeben ist. Dadurch wird eine besonders stabile Verbindung zwischen dem Rahmen und dem Kopfmodul erreicht.

Es ist voreilhaft, wenn eine im Kopfmodul angeordnete Wertscheinhandhabungseinheit mit Hilfe einer weiteren elektromechanischen Verriegelungseinheit in dem Verriegelungszustand mit dem Rahmen verriegelt ist, und wenn die Steuereinheit ausgebildet ist, die weitere elektromechanische Verriegelungseinheit derart anzusteuern, dass eine Änderung der weiteren elektromechanischen Verriegelungseinheit von dem Verriegelungszustand in den Entriegelungszustand nur bei Detektion des Steuersignals und bei erfolgreicher Verifizierung der Authentifizierungsinformation erfolgt. Dadurch wird ein Herauslösen der Wertscheinhandhabungseinheit aus dem Kopfmodul durch einen unbefugten Dritten besonders wirksam erschwert.

Bei einer vorteilhaften Ausführungsform erfolgt eine Bewegung der weiteren elektromechanischen Verriegelungseinheit von dem Verriegelungszustand in den Entriegelungszustand nur bei Vorliegen einer weiteren Authentifizierungsinformation des Benutzers. Dadurch wird ein besonders hohes Maß an Sicherheit gegen ein Verschieben oder Entfernen der Wertscheinhandhabungseinheit erreicht.

Weitere Merkmale und Vorteile ergeben sich aus der folgenden Beschreibung, welche in Verbindung mit den beigefügten Figuren die Erfindung Ausführungsbeispiele näher erläutert.

Es zeigt:
- Fig. 1: eine Vorderansicht einer Vorrichtung zur Handhabung von Wertscheinen mit einem Kopfmodul und einem Tresormodul gemäß einem ersten Ausführungsbeispiel, wobei dieses Ausführungsbeispiel selbst nicht in den Umfang der beigefügten Ansprüche fällt,
- Fig. 2: eine perspektivische Seitenansicht der Vorrichtung nach Figur 1,
- Fig. 3: eine Detailansicht der Vorrichtung nach Figur 2,
- Fig. 4: eine perspektivische Ansicht des Kopfmoduls nach den vorhergehenden Figuren,
- Fig. 5: eine perspektivische Ansicht einer mechanischen Verriegelungsanordnung der Vorrichtung nach den vorhergehenden Figuren,
- Fig. 6: eine Vorderansicht der mechanischen Verriegelungsanordnung nach Figur 5,
- Fig. 7: eine perspektivische Ansicht einer Vorrichtung zur Handhabung von Wertscheinen gemäß einem zweiten Ausführungsbeispiel,
- Fig. 8: eine Detailansicht der Vorrichtung nach Figur 7, und
- Figur 9: eine schematische Seitenansicht einer Vorrichtung zur Handhabung von Wertscheinen gemäß einem dritten Ausführungsbeispiel, wobei dieses Ausführungsbeispiel nicht in den Umfang der beigefügten Ansprüche fällt.

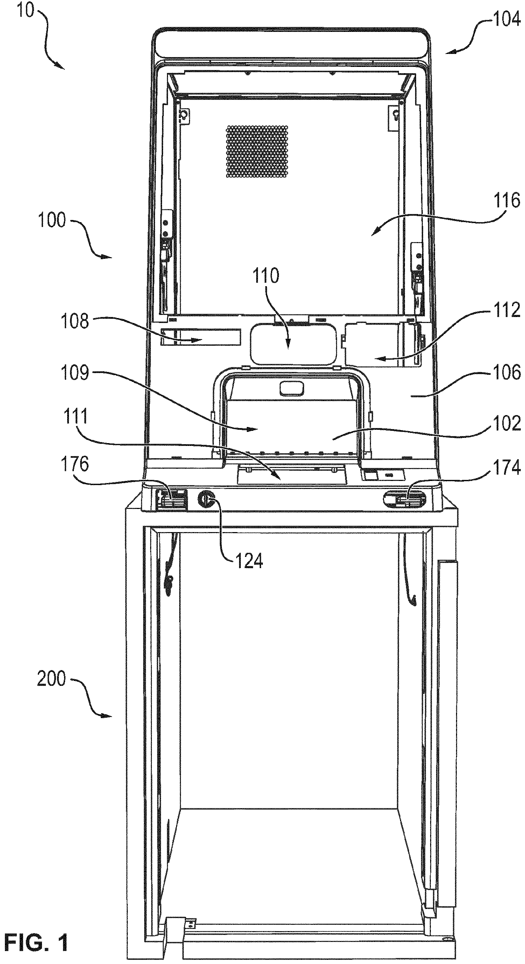

Figur 1 zeigt eine Vorderansicht einer Vorrichtung 10 zur Handhabung von Wertscheinen gemäß einem ersten Ausführungsbeispiel. Zur besseren Erläuterung des Ausführungsbeispiels sind einzelne Elemente der Vorrichtung 10 nicht dargestellt. Die Vorrichtung 10 umfasst ein Kopfmodul 100 und ein Tresormodul 200. In dem Tresormodul 200 sind mehrere nicht dargestellte Geldkassetten zur Aufnahme von Wertscheinen aufnehmbar.

Das Kopfmodul 100 umfasst eine Wertscheinhandhabungseinheit 102 zur Ausgabe von auszuzahlenden Wertscheinen an eine Bedienperson und/oder zur Eingabe von durch eine Bedienperson einzuzahlender Wertscheine. Sowohl das Tresormodul 200 als auch das Kopfmodul 100 haben jeweils eine Übergabeöffnung, durch die Wertscheine von dem Kopfmodul 100 in das Tresormodul 200 transportiert werden können sowie umgekehrt von dem Tresormodul 200 in das Kopfmodul 100. Bei einer alternativen Ausführungsform kann die Vorrichtung 10 auch nur der Auszahlung von Wertscheinen dienen. In diesem Fall sind ausschließlich Wertscheine von dem Tresormodul 200 dem Kopfmodul 100 über die Übergabeöffnungen zuführbar. Bei einer weiteren alternativen Ausführungsform der Erfindung können das Tresormodul 200 und das Kopfmodul 100 auch ein Tresormodul 200 und ein Kopfmodul 100 eines automatischen Kassensystems oder einer automatischen Tresorkasse sein.

Das Kopfmodul 100 umfasst eine Frontblende 104, mit einem Frontblendenrahmen 106 und einer in Figur 1 nicht dargestellten Frontblendenverkleidung. Die Frontblende 104 ist mit einem in Figur 1 von dem Frontblendenrahmen 106 verdeckten Rahmen 136 des Kopfmoduls 100 schwenkbar verbunden. In Figur 1 ist ein Verriegelungszustand der Vorrichtung 10 gezeigt, bei welchem die Frontblende 104 mit dem Rahmen 136 des Kopfmoduls 100 derart verriegelt ist, dass die Wertscheinhandhabungseinheit 102 und die Übergabeöffnungen vor einem Zugriff eines unberechtigten Benutzers geschützt sind.

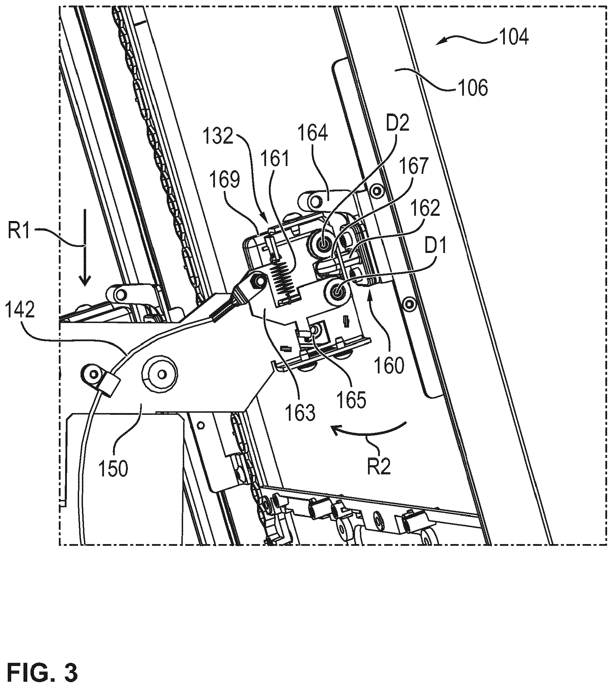

Die Frontblende 104 hat mehrere Öffnungen 108 bis 116, in die Hardwarekomponenten, wie ein Encrypted PIN Pad, eine Anzeigeeinheit, insbesondere ein Touchscreen oder eine Kombination aus Anzeigeeinheit und Encrypted PIN Pad zur Pin-Eingabe, ein Kartenleser, eine Kamera, ein Fingerabdrucksensor, ein Ein-und/oder Ausgabefach für Wertscheine, ein Nahfeldkommunikationsmodul, ein Barcodeleser, ein Belegdrucker und/oder eine Wertscheinausgabeeinheit in die Frontblende integriert werden können, wobei zumindest ein Teil der Hardwarekomponenten fest mit dem Frontblendenrahmen 106 verbunden und zusammen mit dem Frontblendenrahmen 106 verschwenkbar sind. Bei einer vorteilhaften Ausführungsform kann der Touchscreen derart ausgestaltet sein, dass eine sichere PIN-Eingabe über den Touchscreen erfolgen kann. Die Hardwarekomponenten dienen insbesondere als Mensch-Maschine-Schnittstelle für eine Bedienperson zum Bedienen der Vorrichtung 10. In der Darstellung nach Figur 1 sind ferner mechanisch betätigbare Verriegelungselemente 174, 176 und ein Schlüssel 124 sichtbar, deren Aufbau und Funktion insbesondere in Zusammenhang mit Figur 3 noch näher beschrieben wird.

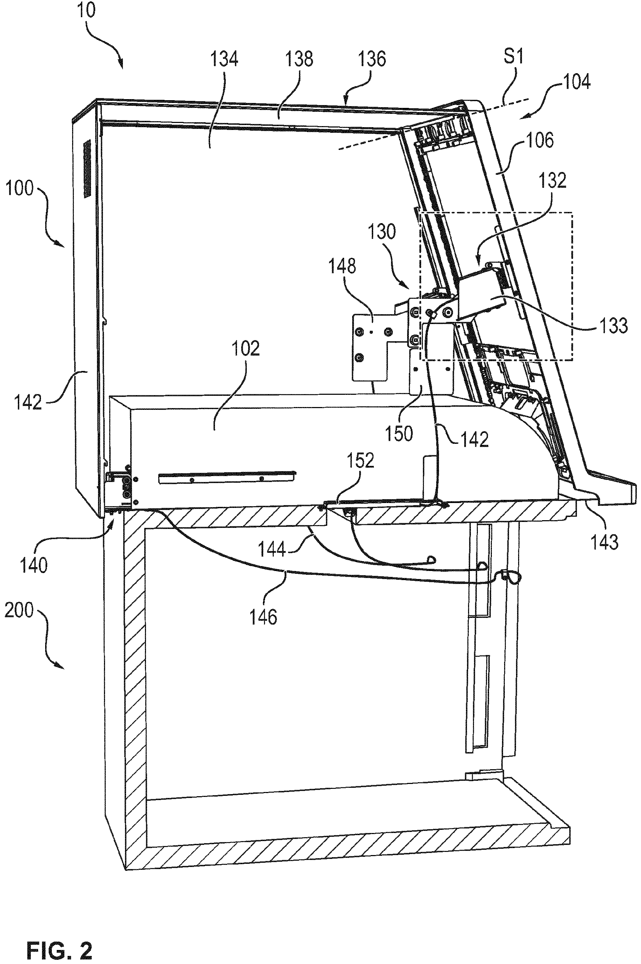

Figur 2 zeigt eine perspektivische Seitenansicht der Vorrichtung 10 nach Figur 1. Elemente mit gleichem Aufbau oder gleicher Funktion haben dieselben Bezugszeichen. Das Kopfmodul 100 umfasst einen Rahmen 136, der im betriebsbereiten Zustand der Vorrichtung 10 von Gehäuseelementen 134, 138, 142 umgeben ist. Zur besseren Erläuterung des Ausführungsbeispiels ist ein seitliches Gehäuseelement des Rahmens 136 in Figur 2 nicht dargestellt, sodass eine Sicht in das Innere des Kopfmoduls 100 möglich ist. Ferner ist eine Seitenwand des Tresormoduls 200 nicht dargestellt, sodass eine Sicht in das Innere des Tresormoduls 200 möglich ist.

Eine erste elektromechanisches Verriegelungseinheit 130 ist über ein Befestigungselement 148 fest mit einem nicht dargestellten Querträger des Rahmens 136 verbunden, eine zweite elektromechanische Verriegelungseinheit 132 ist über das Befestigungselement 150 fest mit einem weiteren nicht dargestellten Querträger des Rahmens 136 verbunden und der ersten elektromechanischen Verriegelungseinheit 130 gegenüberliegend angeordnet. Mit Hilfe der elektromechanischen Verriegelungseinheiten 130, 132 wird insbesondere ein Verschwenken des Frontblendenrahmens 106 im Verriegelungszustand um die Schwenkachse S1 verhindert.

Ferner ist eine dritte elektromechanische Verriegelungseinheit 140 vorgesehen, die fest mit dem Bodenträger 143 des Rahmens 136 verbunden ist und die Wertscheinhandhabungseinheit 102 in dem Verriegelungszustand sicher mit dem Kopfmodul 100 verriegelt. Bei einer vorteilhaften Ausführungsform verhindert die dritte Verriegelungseinheit 140 im verriegelten Zustand ein Herausziehen der Wertscheinhandhabungseinheit 102 aus dem Kopfmodul 100 bei geöffneter Frontblende 104.

Die elektromechanischen Verriegelungseinheiten 130, 132, 140 haben jeweils eine manuell betätigbare Notentriegelung, deren Aufbau nachfolgend auch in Zusammenhang mit Figur 3 näher beschrieben wird. Die Notentriegelung der ersten elektromechanischen Verriegelungseinheit 130 umfasst im vorliegenden Ausführungsbeispiel einen ersten Betätigungsdraht 144, die Notentriegelung der zweiten elektromechanischen Verriegelungseinheit 132 umfasst einen zweiten Betätigungsdraht 142 und die Notentriegelung der dritten elektromechanischen Verriegelungseinheit 140 umfasst einen dritten Betätigungsdraht 146.

Ein erstes Ende jedes Betätigungsdrahtes 142, 144, 146 ist mit der entsprechenden elektromechanischen Verriegelungseinheit 130, 132, 140 gekoppelt und das zweite Ende ist in das Tresormodul 200 geführt. Hierdurch ist eine Notentriegelung der elektromechanischen Verriegelungseinheiten 130, 132, 140 nur dann möglich, wenn ein berechtigter Benutzer über eine Öffnung im Tresormodul 200 Zugang zu den Betätigungsdrähten 142, 144, 146 hat. Im Kopfmodul 100 werden die Betätigungsdrähte 142, 144, 146 innerhalb der Befestigungselemente 148, 150 und innerhalb von Kabelführungsabdeckungen 152 sicher geführt, wobei in der Darstellung nach Figur 2 eine der Kabelführungsabdeckung mit dem Bezugszeichen 152 sichtbar ist. Die Kabelführungsabdeckungen 152 verhindern insbesondere eine Manipulation der Betätigungsdrähte 142, 144, 146 durch unberechtigte Dritte.

Figur 3 zeigt eine Detailansicht nach Figur 2, in welcher die Verbindung zwischen dem Frontblendenrahmen 106 und der zweiten elektromechanischen Verriegelungseinheit 132 in dem Verriegelungszustand dargestellt ist. Nachfolgend werden der Aufbau und die Funktion der zweiten elektromechanischen Verriegelungseinheit 132 näher beschrieben, die mit den notwendigen Änderungen auch für die erste elektromechanische Verriegelungseinheit 130 gelten.

In der Darstellung nach Figur 3 ist zur besseren Beschreibung der Verriegelungseinheit 132 eine in Figur 2 sichtbare Verkleidung 133 der Verriegelungseinheit 132 nicht dargestellt. Die Verriegelungseinheit 132 umfasst ein hakenförmiges erstes Eingriffselement 167, das mit Hilfe einer in einem Gehäuseelement 169 angeordneten elektrischen Antriebseinheit von einem Verriegelungszustand in einen Entriegelungszustand und vice versa bewegbar ist. In dem dargestellten Verriegelungszustand greift das erste Eingriffselement 167 in einen bügelförmigen Eingriffsbereich 162 eines zweiten Eingriffselements 160, das fest mit dem Frontblendenrahmen 106 verbunden ist. Somit stehen das erste Eingriffselement 167 und das zweite Eingriffselement 160 in dem gezeigten Verriegelungszustand miteinander in Eingriff.

Ein Lösen der Verbindung zwischen dem ersten Eingriffselement 167 der Verriegelungseinheit 132 und dem zweiten Eingriffselement 160 ist im Verriegelungszustand, insbesondere durch äußere Krafteinwirkung, nicht möglich. Jedoch kann die Verbindung im Notfall durch die Notentriegelung mit Hilfe des zweiten Betätigungsdrahtes 142 mechanisch gelöst werden. Bei dieser Notentriegelung wird der mechanische Betätigungsdraht 142 in Richtung R1 gezogen, sodass ein über ein Federelement 161 gelagertes erstes Verschlusselement 163 um die Drehachse D1 bewegt wird. Diese Bewegung des ersten Verschlusselements 163 bewirkt eine Freigabe der Bewegung eines zweiten Verschlusselements 165 in Richtung R2, wodurch über einen mechanischen Eingriff eine Bewegung des ersten Eingriffselements 167 um die Drehachse D2 derart freigegeben wird, dass der Eingriff zwischen dem ersten Eingriffselement 167 dem zweiten Eingriffselement 160 gelöst wird. Bei anderen Ausführungsformen sind auch andere Notentriegelungsmechanismen möglich.

Ferner kann im normalen Betrieb der Vorrichtung 10, d.h. nicht bei Notentriegelung, die Verbindung zwischen dem ersten Eingriffselement 167 und dem zweiten Eingriffselement 160 elektromechanisch gelöst werden, indem die elektrische Antriebseinheit zum Antrieb der Bewegung des ersten Eingriffselements 167 mit Hilfe einer nicht dargestellten Steuereinheit angesteuert wird.

Der Aufbau der dritten Verriegelungseinheit 140 entspricht dem Aufbau der beschriebenen zweiten elektromechanischen Verriegelungseinheit 132. Im Unterschied zu der ersten und zu der zweiten elektromechanischen Verriegelungseinheit 130, 132 verbindet die dritte elektromechanische Verriegelungseinheit 140 allerdings nicht den Frontblendenrahmen 106 mit dem Rahmen 136, sondern die Wertscheinhandhabungseinheit 102 mit dem Bodenträger 143 des Rahmens 136, sodass im Verriegelungszustand ein Herausziehen der Wertscheinhandhabungseinheit 102 aus dem Kopfmodul 100 verhindert wird. Die Wertscheinhandhabungseinheit 102 ist insbesondere auf Schienen gelagert und ist im entriegelten Zustand nach vorn aus dem Kopfmodul 100 herausziehbar.

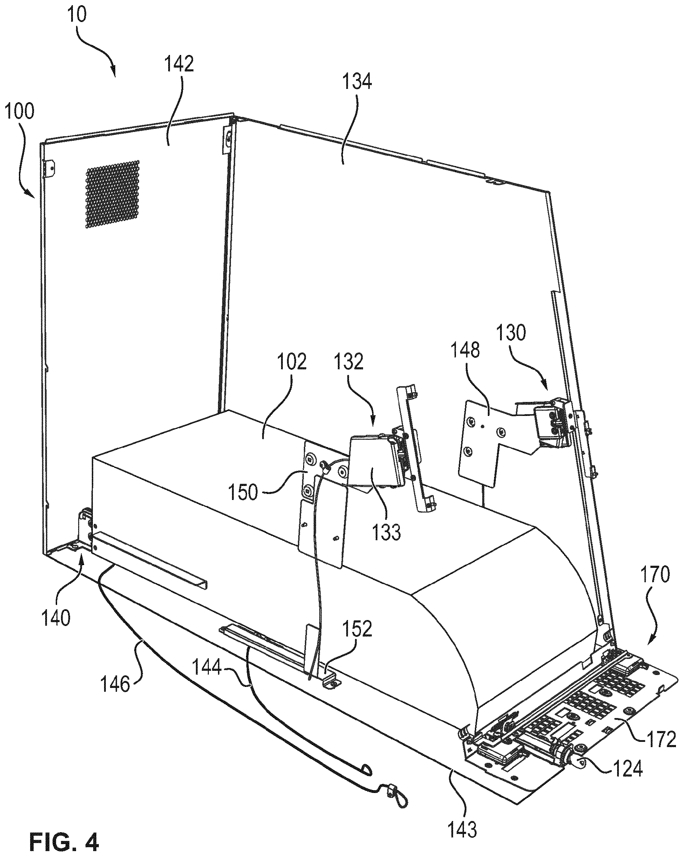

Figur 4 zeigt eine perspektivische Ansicht des Kopfmoduls 100 nach den vorhergehenden Figuren, wobei auch in Figur 4 zur besseren Erläuterung des Ausführungsbeispiels einige Elemente der Vorrichtung 10 nicht dargestellt sind. In Figur 4 ist insbesondere eine mechanische Verriegelungsanordnung 170 sichtbar, die über ein Bodenelement 172 fest mit dem Frontblendenrahmen 106 verbunden ist. Eine Detailansicht der mechanischen Verriegelungsanordnung 170 ist im Zusammenhang mit Figur 4 gezeigt.

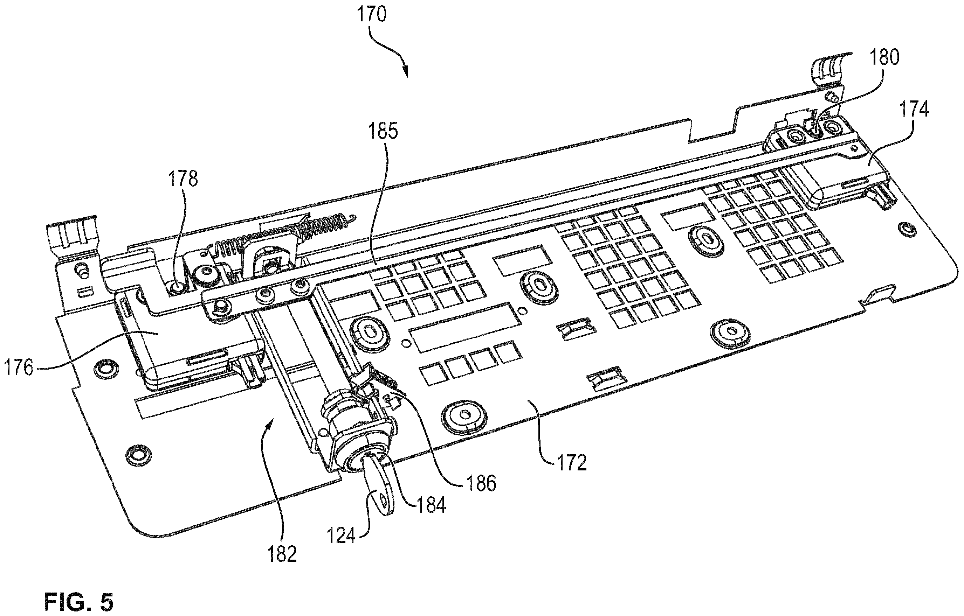

Figur 5 zeigt eine perspektivische Ansicht der mechanischen Verriegelungsanordnung 170. Die mechanische Verriegelungsanordnung 170 umfasst ein erstes mechanisch betätigbares Verriegelungselement 174 und ein zweites mechanisch betätigbares Verriegelungselement 176. Zwei Bolzen 178, 180 sind an einer festen Position im Kopfmodul 100 angeordnet und stehen aus dem Bodenträger 143 heraus. Im Verriegelungszustand stehen die Bolzen 178, 180 mit den Verriegelungselementen 174, 176 in Eingriff, sodass ein Verschwenken des Frontblendenrahmens 106 mit der Verriegelungsanordnung 170 um die Schwenkachse S1 verhindert wird.

Der Schlüssel 124 greift in ein Schloss 184, das mit dem ersten Verriegelungselement 176 über ein Koppelungselement 182 derart mechanisch gekoppelt ist, dass bei einer Betätigung des Schlüssels 124 in eine geöffnete Schlossstellung der Eingriff des Bolzens 178 mit dem Verriegelungselement 176 des Rahmens 136 gelöst wird.

Das erste Verriegelungselement 176 und das zweite Verriegelungselement 178 sind über einen Verbindungsstab 185 derart miteinander mechanisch gekoppelt, dass bei einer Betätigung des Schlüssel 124 auch der Eingriff des Bolzens 180 mit dem Verriegelungselement 174 gelöst wird. Bei einer alternativen Ausführungsform kann auch nur ein mechanisch betätigbares Verriegelungselement 174, 178 vorgesehen sein. Bei einer weiteren alternativen Ausführungsform kann für jedes mechanisch betätigbare Verriegelungselement 174, 178 ein separates Schloss 184 und ein eigenes mechanisches Koppelungselement 182 vorgesehen sein. Ferner ist es bei alternativen Ausführungsformen möglich, anstelle der mechanisch betätigbaren Verriegelungselemente 174, 178 elektromechanische Verriegelungseinheiten vorzusehen.

Das Schloss 184 ist ferner mit einem elektrischen Schalter 186 gekoppelt, wobei der elektrische Schalter 186 derart ausgebildet und angeordnet ist, dass er beim Betätigen des Schlosses 184 mit Hilfe des Schlüssels 124 in die geöffnete Schlossstellung ein Steuersignal erzeugt und an die nicht dargestellte Steuereinheit der Vorrichtung 10 übermittelt.

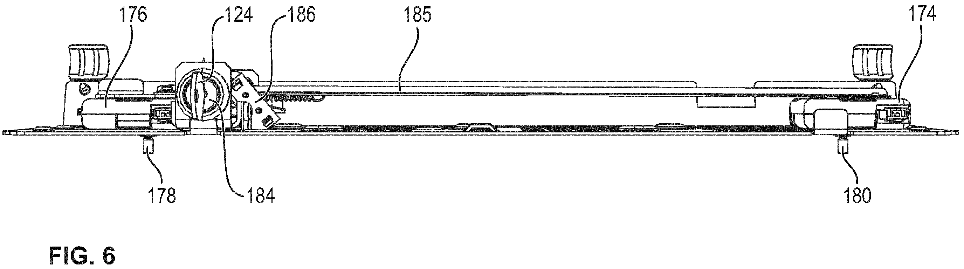

Figur 6 zeigt eine Vorderansicht der mechanischen Verriegelungsanordnung 170 nach Figur 5, aus der insbesondere das Herausragen der Bolzen 178 und 180 im verriegelten Zustand aus der Verriegelungsanordnung 170 erkennbar ist.

Die Vorrichtung 10 umfasst neben den in den Figuren 1 bis 5 dargestellten Elementen mindestens eine nicht dargestellte Authentifizierungseinheit zum Ermitteln von Authentifizierungsinformationen eines Benutzers. Die Authentifizierungseinheit umfasst in der beschriebenen ersten Ausführungsform ein Kartenlesegerät, ein Encrypted PIN Pad und einen Monitor. Alternativ oder zusätzlich können auch ein NFC-Leser, ein Fingerabdruckleser und/oder ein Barcodeleser vorgesehen sein. Nachfolgend wird das Verfahren beschrieben, mit welchem, mit Ausnahme der Notentriegelung, eine Änderung des Verriegelungszustands in den Entriegelungszustand der Vorrichtung 10 möglich ist.

Damit die Vorrichtung 10 von dem Verriegelungszustand in den Entriegelungszustand wechseln kann, muss sich der Benutzer zunächst durch die Eingabe einer individuellen Karte in das Kartenlesegerät identifizieren. In einem zweiten Schritt wird der Benutzer über eine Anzeige am Monitor aufgefordert, einen individuellen Zahlencode (PIN) über die Eingabetastatur einzugeben. Diese Authentifizierungsinformationen, die insbesondere die Kartennummer und den Zahlencode (PIN) umfassen, werden von der Authentifizierungseinheit an die Steuereinheit übermittelt und von der Steuereinheit verifiziert. Bei alternativen Ausführungsformen können die Authentifizierungsmittel unabhängig voneinander eingesetzt werden, insbesondere kann eine PIN-Eingabe unabhängig von dem Lesen einer Karte erfolgen.

Mit dem Verifizieren der Authentifizierungsinformationen bezeugt die Steuereinheit die Berechtigung zum Durchführen vorbestimmter Handlungen durch den Benutzer. Das Ermitteln der Authentifizierungsinformationen durch die Authentifizierungseinheit und das Verifizieren der Authentifizierungsinformationen durch die Steuereinheit wird nachfolgend unter dem Begriff "Authentifizierung" zusammengefasst. Eine Authentifizierung ist von der einfachen Identifizierung zu unterscheiden, bei welcher lediglich eine Identität festgestellt, deren Echtheit aber nicht überprüft wird.

Bei erfolgreicher Authentifizierung muss der Benutzer in einem zweiten Schritt das Schloss 184 mit Hilfe des Schlüssels 124 betätigen. Durch die Betätigung des Schlosses 184 werden das erste und das zweite mechanisch betätigbare Verriegelungselement 174, 176 entriegelt, zudem wird der elektrischer Schalter 186 betätigt. Der Schalter 186 gibt das entsprechende Steuersignal an die Steuereinheit aus, das von dieser verarbeitet wird.

Sobald die Steuereinheit nach der Authentifizierung des Benutzers zusätzlich das Steuersignal des Schalters 186 empfangen hat, steuert die Steuereinheit die Antriebseinheiten zum Antrieb der Bewegung der ersten Eingriffselemente 167 der ersten und zweiten Verriegelungseinheiten 132, 134, 140 derart an, dass die jeweiligen Verbindungen zwischen den ersten Eingriffselementen 167 und den zweiten Eingriffselementen 160 gelöst werden. Die Entriegelung der ersten und der zweiten elektromechanischen Verriegelungseinheiten 130, 132 hat zur Folge, dass die Frontblende 104 gegenüber dem Rahmen 136 verschwenkbar um die Schwenkachse S1 ist. Durch die Entriegelung der dritten elektromechanischen Verriegelungseinheit 140 wird bewirkt, dass die Wertscheinhandhabungseinheit 104 aus dem Kopfmodul 100 herausziehbar und entnehmbar ist.

Bei einer vorteilhaften Ausführungsform kann die Wertscheinhandhabungseinheit 104 nur dann aus dem Kopfmodul herausbewegt werden, wenn der Benutzer eine weitere Information, insbesondere einen Zahlencode, in das Encrypted PIN Pad eingibt und wenn diese weitere Information von der Steuereinheit verifiziert wird.

Bei einer alternativen Ausführungsform kann das Encrypted PIN Pad durch ein Touchmodul ersetzt sein. In weiteren alternativen Ausführungsformen kann die Authentifizierungseinheit alternativ oder zusätzlich zum Kartenlesegerät ein Nahfeldkommunikationsmodul und/oder einen Barcodeleser umfassen. In einer weiteren Ausführungsform umfasst die Authentifizierungseinheit eine Sensoreinheit zum Erfassen biometrischer Daten, insbesondere eine Kamera und/oder einen Fingerabdrucksensor, sodass ein berechtigter Benutzer anhand biometrischer Eigenschaften authentifizierbar ist.

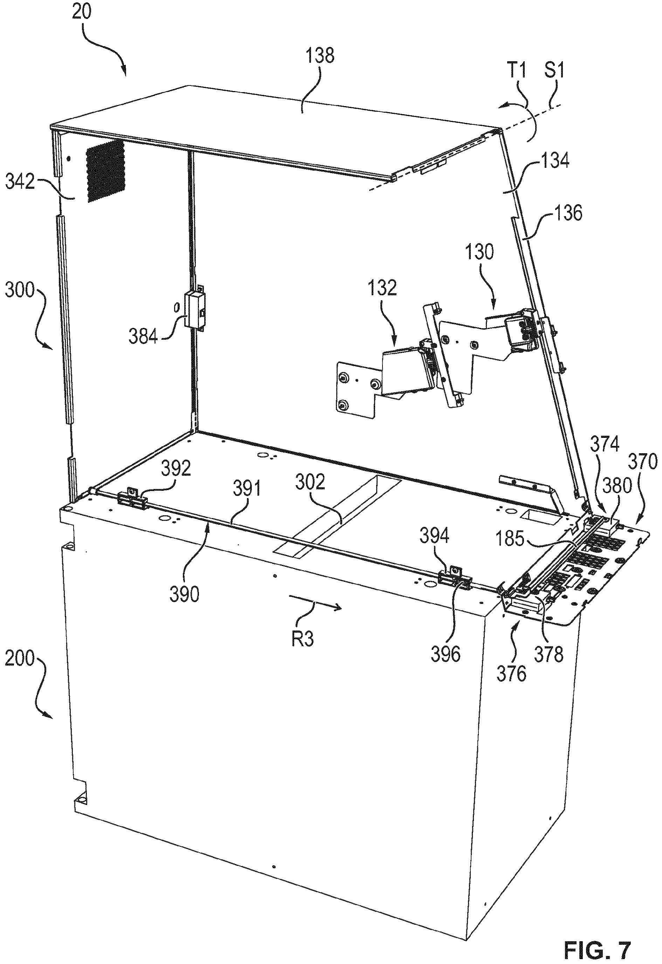

Figur 7 zeigt eine Wertscheinhandhabungsvorrichtung 20 gemäß einem zweiten Ausführungsbeispiel. Elemente mit gleicher Funktion oder gleichem Aufbau haben dieseleben Bezugszeichen. Die Vorrichtung 20 umfasst ein Kopfmodul 300 und das Tresormodul 200. Das Kopfmodul 300 umfasst eine Anordnung zum Verriegeln und Entriegeln Frontblende.

Zur besseren Erläuterung des Ausführungsbeispiels sind einzelne Elemente der Vorrichtung 20 in Figur 7 nicht dargestellt. Insbesondere ist in Figur 7 die Frontblende 104 nicht dargestellt, die in dem Verriegelungszustand mit dem Rahmen 136 des Kopfmoduls 300 derart verriegelt ist, dass die Wertscheinhandhabungseinheit 102 und die Übergabeöffnung 302 zum Tresormodul 200 vor einem Zugriff eines unberechtigten Benutzers geschützt sind. Im Unterschied zum ersten Ausführungsbeispiel ist die Wertscheinhandhabungseinheit 102 im zweiten Ausführungsbeispiel insbesondere nicht über eine elektromechanischen Verriegelungseinheit 140 mit dem Bodenträger 143 verbunden.

Die Vorrichtung 20 umfasst eine, nur von der Hinterseite der Vorrichtung 20 zugängliche, verschließ- und verriegelbare Tür 342. Die Vorrichtung 20 umfasst ferner einen Entriegelungsmechanismus 390 zum Entriegeln der mechanischen Verriegelungselemente 374 und 376. Somit ersetzt der Entriegelungsmechanismus 390 den Schlüssel 124 und das Schloss 184 aus dem ersten oben beschriebenen Ausführungsbeispiel. Der Entriegelungsmechanismus 390 umfasst mindestens einen Entriegelungsstab 391, der in zwei Stabführungsabdeckungen 392, 394 geführt und in der Stabführungsabdeckung 394 über ein Federelement 396 federnd gelagert ist.

Damit bei der Vorrichtung 20 die elektromechanischen Verriegelungseinheiten 130, 132 und die mechanisch betätigbaren Verriegelungselemente 374, 376 von dem Verriegelungszustand in den Entriegelungszustand wechseln können, muss sich ein Benutzer, wie auch beim ersten Ausführungsbeispiel, zunächst mit Hilfe der Authentifizierungseinheit identifizieren. Die Authentifizierungsinformationen, die insbesondere die Kartennummer und den Zahlencode (PIN) oder nur den Zahlencode (PIN) umfassen, werden von der Authentifizierungseinheit an die nicht dargestellte Steuereinheit übermittelt und von der Steuereinheit verifiziert.

Zum Entriegeln der Tür 342 muss der Benutzer ein Schloss zum Verschließen der Tür 342 öffnen. Bei einer alternativen Ausführungsform wird bei erfolgreicher Authentifizierung eine nicht dargestellte Verriegelungseinheit zum Entriegeln der Tür 342 derart angesteuert, dass die Tür 342 entriegelt wird. Die entriegelte Tür 342 wird dann in einem nächsten Schritt von dem berechtigten Benutzer geöffnet, wobei ein elektrischer Schalter 386 vorgesehen ist, der derart ausgebildet und angeordnet ist, dass er beim Öffnen der Tür 342 ein Steuersignal erzeugt und an die Steuereinheit der Vorrichtung 20 übermittelt.

Sobald die Steuereinheit nach der Authentifizierung des Benutzers das Steuersignal des Schalters 386 empfangen hat, entriegelt die Steuereinheit die erste und die zweite elektromechanische Verriegelungseinheit 130, 132 nach dem im Zusammenhang mit dem ersten Ausführungsbeispiel beschriebenen Verfahren. In einem nächsten Schritt muss der Benutzer den Entriegelungsmechanismus 390 zur Entriegelung der mechanisch betätigbaren Verriegelungselemente 374, 376 betätigen.

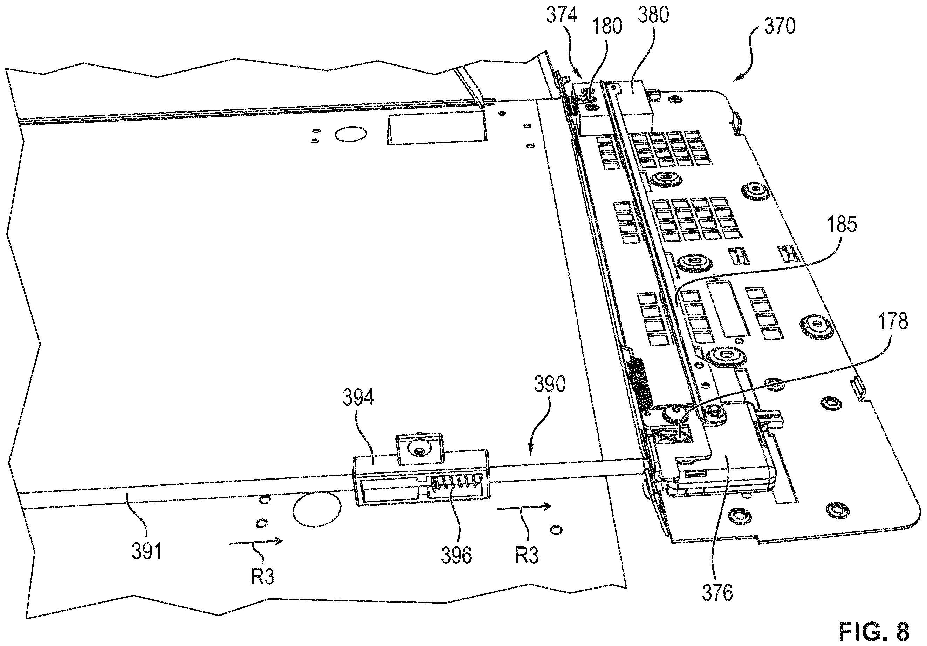

Figur 8 zeigt eine Detailansicht der Vorrichtung 20 nach Figur 7, in der die mechanische Verriegelungsanordnung 370 und ein Teil des Verriegelungsmechanismus 390 dargestellt sind. Bei Betätigung des Entriegelungsmechanismus 390, d.h. bei Bewegung des Entriegelungsstabs 391 in Richtung R3, wird der Eingriff des Bolzens 178 mit dem Verriegelungselement 376 gelöst. Das erste Verriegelungselement 374 und das zweite Verriegelungselement 376 sind über den Verbindungsstab 185 derart miteinander mechanisch gekoppelt, dass bei einer Betätigung des Entriegelungsmechanismus 390 auch der Eingriff des Bolzens 180 mit dem Verriegelungselement 374 gelöst wird.

Die Entriegelung der mechanisch betätigbaren Verriegelungselemente 374, 376 hat zur Folge, dass die Frontblende 104 mit der Verriegelungsanordnung 370 gegenüber dem Rahmen 136 verschwenkbar um die Schwenkachse S1 ist. Über die Verschwenkung der Frontblende 104 in Schwenkrichtung T1 ist ein Zugriff auf die Hardwarekomponenten des Kopfmoduls 300 der Vorrichtung 20 möglich. Die Wertscheinhandhabungseinheit 102 ist in dem beschriebenen Ausführungsbeispiel entgegen der Richtung R3, d.h. in Richtung der Tür 342 durch die Türöffnung hindurch verschiebbar.

Damit bei der Vorrichtung 20 die mechanisch betätigbaren Verriegelungselemente 374, 376 von dem Entriegelungszustand in den Verriegelungszustand wechseln, wird die Frontblende 104 mit der Verriegelungsanordnung 370 entgegen der Schwenkrichtung T1 so weit um die Schwenkachse S1 verschwenkt, bis eine Rastverbindung zwischen den mechanisch betätigbaren Verriegelungselementen 374, 376 und dem jeweiligen Bolzen 178, 180 hergestellt ist. Beim Herstellen der Rastverbindung wird jeweils ein elektrischer Schalter im Inneren der Verriegelungselemente 374, 376 aktiviert, der ein Signal an die Steuereinheit sendet, wobei die Steuereinheit beim Empfang des Signals den Verriegelungszustand der Verriegelungselemente 374, 376 detektiert. Auf dieselbe Weise wechseln auch die mechanisch betätigbaren Verriegelungselemente 174, 176 von dem Entriegelungszustand in den Verriegelungszustand. Auch die elektromechanischen Verriegelungseinheiten 130, 132, 140 wechseln mit dem Herstellen einer Rastverbindung von dem Entriegelungszustand in den Verriegelungszustand.

Bei der oben beschriebenen Schwenkbewegung drückt der im Zusammenhang mit Figur 3 beschriebene bügelförmige Eingriffsbereich 162 das erste Eingriffselement 167 in die Verriegelungseinheit 132 hinein. Dadurch wird das erste Eingriffselement 167 aus dem Inneren der Verriegelungseinheit 132 heraus bewegt und greift wieder in den bügelförmigen Eingriffsbereich 162 ein, sodass die Verriegelungseinheit 132 von dem Entriegelungszustand in den Verriegelungszustand wechselt. Die Verriegelungseinheit 130 wechselt, mit den nötigen Abänderungen, auf dieselbe Weise wie die Verriegelungseinheit 132 von dem Entriegelungszustand in den Verriegelungszustand.

Bei einer alternativen Ausführungsform wird bei Aktivierung der elektrischen Schalter im Inneren der mechanisch betätigbaren Verriegelungselemente 130, 132 ein Signal an die Steuereinheit gesendet, wobei die Steuereinheit beim Empfang des Signals eine Antriebseinheit der elektromechanischen Verriegelungseinheiten 130, 132 derart ansteuert, dass das erste Eingriffselement 167 in den bügelförmigen Eingriffsbereich 162 eingreift.

Im Unterschied zur Vorrichtung 10 hat die Vorrichtung 20 keine manuell betätigbare Notentriegelung mit Betätigungsdrähten für die elektromechanischen Verriegelungseinheiten 130, 132. Eine Notentriegelung der Verriegelungseinheiten 130, 132 ist bei geöffneter Tür 342 mit Hilfe eines von Hand zu führenden Werkzeugs, insbesondere eines Schraubendrehers, möglich.

Bei einer alternativen Ausführungsform umfasst die Anordnung zum Verschließen eines Kopfmoduls 100, 300 einer Vorrichtung 10, 20 sowohl den Entriegelungsmechanismus 390, als auch das Schloss 184, so dass mechanisch betätigbare Verriegelungselemente 174, 176, 374, 376 sowohl bei einer Betätigung des Schlosses 184 mit Hilfe eine Schlüssels 124 als auch über den Entriegelungsmechanismus 390 entriegelbar sind.

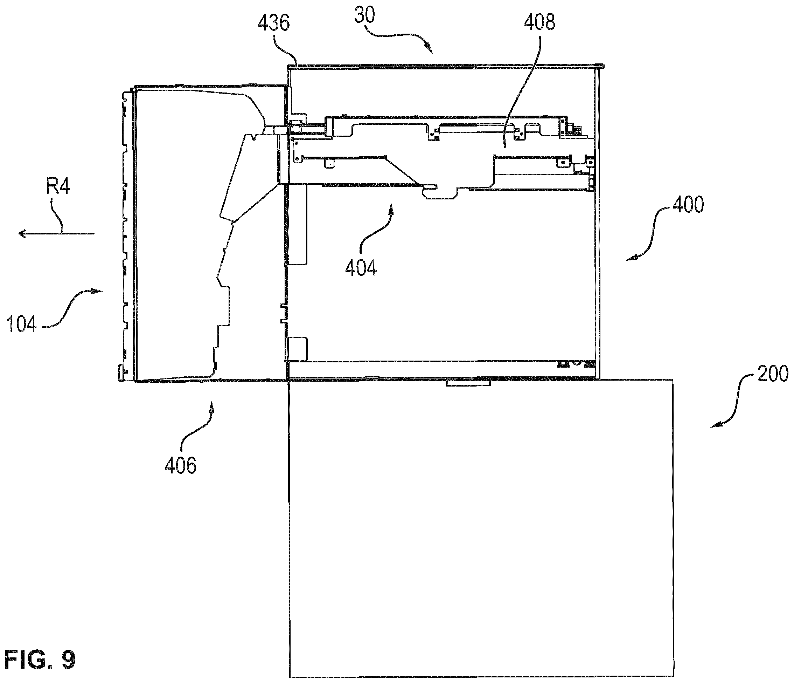

Figur 9 zeigt eine schematische Seitenansicht einer Vorrichtung 30 zur Handhabung von Wertscheinen gemäß einem dritten Ausführungsbeispiel. Diese unterscheidet sich von den ersten beiden Ausführungsformen dadurch, dass die Frontblende 104 nicht schwenkbar mit dem Rahmen 436 des Kopfmoduls 400 verbunden ist. Die Frontblende 104 ist vielmehr über ein Gehäuse 406 fest mit zwei gegenüberliegend angeordneten Teleskopschienenanordnung verbunden, wobei in der Darstellung nach Figur 3 nur die mit dem Bezugszeichen gekennzeichnete Teleskopschienenanordnung 404 sichtbar ist. Die Teleskopschienenanordnungen 404 sind jeweils an einem Querträger 408 des Rahmens 436 angeordnet. In der Vorrichtung 30 ist mindestens eine in Figur 3 nicht sichtbare elektromechanische Verriegelungseinheit derart angeordnet, dass im Verriegelungszustand der elektromechanischen Verriegelungseinheit ein Ausziehen der Teleskopschienen der Teleskopschienenanordnungen 404 verhindert ist. Somit ist eine translatorische Bewegung der Frontblende 104 mitsamt dem Gehäuse 406 in Richtung R4 nur bei einem Entriegelungszustand der elektromechanischen Verriegelungseinheit möglich. Die Verriegelungseinheit stimmt vorzugsweise in Aufbau oder Funktion mit den in Zusammenhang mit den Figuren 1 und 2 beschriebenen elektromechanischen Verriegelungseinheiten 130, 132, 140 überein.

Bei einer weiteren alternativen Ausführungsform ist die Frontblende 104 derart mit dem Rahmen 136, 436 verbunden, dass diese im Entriegelungszustand von dem Rahmen 136, 436 entfernbar, d.h. vollständig lösbar und somit abnehmbar, ist.

### Bezugszeichenliste

- 10, 20, 30: Vorrichtung
- 100, 300, 400: Kopfmodul
- 200: Tresormodul
- 102: Wertscheinhandhabungseinheit
- 104: Frontblende
- 106: Frontblendenrahmen
- 108 bis 116: Öffnung
- 124: Schlüssel
- 130, 132, 140: elektromechanische Verriegelungseinheit
- 134, 138, 142, 169: Gehäuseelement
- 136, 436: Rahmen
- 142, 144, 146: Betätigungsdraht
- 143: Bodenträger
- 148, 150: Befestigungselement
- 152: Kabelführungsabdeckung
- 162: Eingriffsbereich
- 160, 167: Eingriffselement
- 161, 396: Federelement
- 163, 165: Verschlusselement
- 170, 370: mechanische Verriegelungsanordnung
- 172: Bodenelement
- 174, 176, 374, 376: mechanisch betätigbares Verriegelungselemente
- 178, 180: Bolzen
- 182: mechanisches Koppelungselement
- 184: Schloss
- 185: Verbindungsstab
- 186, 386: elektrischer Schalter
- 342: Tür
- 390: Entriegelungsmechanismus
- 391: Entriegelungsstab
- 392, 394: Stabführungsabdeckung
- 404: Teleskopschienenanordnung
- 406: Gehäuse
- 408: Querträger
- D1, D2: Drehachse
- R1, R2, R3, R4: Richtung
- S1: Schwenkachse
- T1: Drehrichtung

## Patentansprüche

1. Anordnung zum sicheren Verschließen eines Kopfmoduls (100, 300, 400) einer Vorrichtung (10, 20, 30) zur Handhabung von Wertscheinen,
mit einem Kopfmodul (100, 300, 400), das einen Rahmen (136, 436) und eine Frontblende (104) umfasst,
mit mindestens einer Sensoreinheit zur Ausgabe eines Steuersignals,
mit einer Authentifizierungseinheit zum Ermitteln von Authentifizierungsinformationen,
mit mindestens einem mechanisch betätigbaren Verriegelungselement (174, 176, 374, 376),
mit einer Steuereinheit,
wobei das Kopfmodul (100, 300, 400) mindestens eine elektromechanische Verriegelungseinheit (130, 132) umfasst, die in einem Verriegelungszustand eine Verriegelung der Frontblende (104) mit dem Rahmen (136, 436) erzeugt, und die die Verriegelung in einem Entriegelungszustand aufhebt,
wobei die Steuereinheit ausgebildet ist, eine Detektion des Steuersignals und eine Verifizierung der Authentifizierungsinformation durchzuführen, und
wobei die Steuereinheit ausgebildet ist, die elektromechanische Verriegelungseinheit (130, 132) derart anzusteuern,
wobei eine Änderung der elektromechanischen Verriegelungseinheit (130, 132) von dem Verriegelungszustand in den Entriegelungszustand nur bei Detektion des Steuersignals und bei erfolgreicher Verifizierung der Authentifizierungsinformation erfolgt,
wobei mindestens ein stabförmiges Verriegelungselement (178, 180) an einer festen Position im Kopfmodul (100, 300, 400) angeordnet ist und im Verriegelungszustand mit dem mechanisch betätigbaren Verriegelungselement (174, 176, 374, 376) in Eingriff steht,
wobei die Frontblende (104) nur bei einer Entriegelung des mindestens einen mechanisch betätigbaren Verriegelungselements (174, 176, 374, 376) und der mindestens einen elektromechanischen Verriegelungseinheit (130, 132) relativ zum Rahmen verschwenkbar oder von dem Rahmen (136, 436) entfernbar oder mittels mindestens einer Teleskopschiene horizontal und/oder vertikal relativ zum Rahmen (136, 436) verschiebbar ist, und
wobei die Sensoreinheit (384) ausgebildet ist, das Öffnen einer Tür (342) des Kopfmoduls (300) zu detektieren und ausgehend von der Detektion des Öffnens der Tür (342) das Steuersignal auszugeben und an die Steuereinheit zu übermitteln.

2. Anordnung nach Anspruch 1, wobei die Steuereinheit ausgebildet ist, ausgehend von den Authentifizierungsinformationen die Berechtigung eines Benutzers zum Öffnen der Frontblende (104) zu ermitteln.

3. Anordnung nach Anspruch 1 oder 2, wobei bei einer Betätigung des mechanisch betätigbaren Verriegelungselements (374, 376) mit einem Entriegelungsmechanismus (390) der Eingriff des stabförmigen Verriegelungselements (178, 180) mit dem mechanisch betätigbaren Verriegelungselement (374, 376) gelöst wird, wobei der Entriegelungsmechanismus (390) nur bei geöffneter Tür (342) des Kopfmoduls (300) für einen berechtigten Benutzer zugänglich ist.

4. Anordnung nach einem der vorhergehenden Ansprüche , wobei die elektromechanische Verriegelungseinheit (130, 132) eine manuell betätigbare Notentriegelung hat, die mit Hilfe eines Entriegelungswerkzeuges betätigbar ist, wobei eine Betätigung der Notentriegelung nur bei geöffneter Tür (342) des Kopfmoduls (300) möglich ist.

5. Anordnung nach einem der vorhergehenden Ansprüche, wobei das Kopfmodul (100, 300, 400) eine erste mit der Frontblende (104) oder mit dem Rahmen (136, 436) fest verbundene elektromechanische Verriegelungseinheit (130) und eine zweite mit der Frontblende (104) oder mit dem Rahmen (136, 436) fest verbundene elektromechanische Verriegelungseinheit (132) umfasst, wobei die zweite elektromechanische Verriegelungseinheit (132) an einer der ersten elektromechanischen Verriegelungseinheit (130) gegenüberliegenden Seite des Rahmens (136, 436) oder der Frontblende (104) angeordnet ist.

6. Anordnung nach einem der vorhergehenden Ansprüche, wobei der Rahmen (136, 436) in einem Gehäuse des Kopfmoduls (100, 300, 400) integriert ist oder wobei der Rahmen (136, 436) von dem Gehäuse des Kopfmoduls (100, 300, 400) umgegeben ist.

7. Anordnung nach einem der vorhergehenden Ansprüche, wobei eine im Kopfmodul (100, 300, 400) angeordnete Wertscheinhandhabungseinheit (102) mit Hilfe einer weiteren elektromechanischen Verriegelungseinheit (140) in dem Verriegelungszustand mit dem Rahmen (136, 436) verriegelt ist, und wobei die Steuereinheit ausgebildet ist, die weitere elektromechanische Verriegelungseinheit (140) derart anzusteuern, dass eine Änderung der weiteren elektromechanischen Verriegelungseinheit (140) von dem Verriegelungszustand in den Entriegelungszustand nur bei Detektion des Steuersignals und bei erfolgreicher Verifizierung der Authentifizierungsinformation erfolgt.

8. Anordnung nach Anspruch 7, wobei eine Änderung der weiteren elektromechanischen Verriegelungseinheit (140) in den Entriegelungszustand nur bei Vorliegen einer weiteren Authentifizierungsinformation des Benutzers erfolgt.

## Claims

1. Arrangement for securely closing a head module (100, 300, 400) of a device (10, 20, 30) for handling notes of value,
having a head module (100, 300, 400), which comprises a frame (136, 436) and a front panel (104),
having at least one sensor unit for outputting a control signal,
having an authentication unit for determining authentication information,
having at least one mechanically actuable locking element (174, 176, 374, 376),
having a control unit,
wherein the head module (100, 300, 400) comprises at least one electromechanical locking unit (130, 132) which, in a locking state, locks the front panel (104) to the frame (136, 436) and which, in an unlocking state, releases the lock,
wherein the control unit is designed to carry out detection of the control signal and verification of the authentication information, and
wherein the control unit is designed to activate the electromechanical locking unit (130, 132) in such a manner that the electromechanical locking unit (130, 132) changes from the locking state into the unlocking state only when the control signal is detected and when the authentication information has been successfully verified,
wherein at least one rod-shaped locking element (178, 180) is arranged at a fixed position in the head module (100, 300, 400) and, in the locking state, is in engagement with the mechanically actuable locking element (174, 176, 374, 376),
wherein the front panel (104) is pivotable relative to the frame, or is removable from the frame (136, 436) or is displaceable horizontally and/or vertically relative to the frame (136, 436) by means of at least one telescopic rail, only when the at least one mechanically actuable locking element (174, 176, 374, 376) and the at least one electromechanical locking unit (130, 132) is unlocked, and
wherein the sensor unit (384) is designed to detect the opening of a door (342) of the head module (300) and,
starting from the detection of the opening of the door (342), to output the control signal and to transmit same to the control unit.

2. Arrangement according to Claim 1, wherein the control unit is designed, on the basis of the authentication information, to determine the authorization of a user to open the front panel (104).

3. Arrangement according to Claim 1 or 2, wherein, when the mechanically actuable locking element (374, 376) is actuated with an unlocking mechanism (390), the engagement of the rod-shaped locking element (178, 180) with the mechanically actuable locking element (374, 376) is released, wherein the unlocking mechanism (390) is accessible for an authorized user only when the door (342) of the head module (300) is open.

4. Arrangement according to one of the preceding claims, wherein the electromechanical locking unit (130, 132) has a manually actuable emergency unlocking which is actuable with the aid of an unlocking tool, wherein actuation of the emergency unlocking is possible only when the door (342) of the head module (300) is open.

5. Arrangement according to one of the preceding claims, wherein the head module (100, 300, 400) comprises a first electromechanical locking unit (130), which is connected fixedly to the front panel (104) or to the frame (136, 436), and a second electromechanical locking unit (132), which is connected fixedly to the front panel (104) or to the frame (136, 436), wherein the second electromechanical locking unit (132) is arranged on a side of the frame (136, 436) or the front panel (104) opposite the first electromechanical locking unit (130).

6. Arrangement according to one of the preceding claims, wherein the frame (136, 436) is integrated in a housing of the head module (100, 300, 400), or wherein the frame (136, 436) is surrounded by the housing of the head module (100, 300, 400) .

7. Arrangement according to one of the preceding claims, wherein a note of value handling unit (102) arranged in the head module (100, 300, 400) is locked in the locking state to the frame (136, 436) with the aid of a further electromechanical locking unit (140), and wherein the control unit is designed to activate the further electromechanical locking unit (140) in such a manner that the further electromechanical locking unit (140) changes from the locking state into the unlocking state only when the control signal is detected and when the authentication information has been successfully verified.

8. Arrangement according to Claim 7, wherein the further electromechanical locking unit (140) changes into the unlocking state only when further authentication information of the user is present.

## Revendications

1. Agencement pour la fermeture sécurisée d'un module de tête (100, 300, 400) d'un dispositif (10, 20, 30) pour la manipulation de billets de banque,
avec un module de tête (100, 300, 400), qui comprend un cadre (136, 436) et un panneau avant (104),
avec au moins une unité de détection pour émettre un signal de commande,
et avec une unité d'authentification pour déterminer des informations d'authentification,
avec au moins un élément de verrouillage actionnable mécaniquement (174, 176, 374, 376),
avec une unité de commande,
le module de tête (100, 300, 400) comprenant au moins une unité de verrouillage électromécanique (130, 132) qui, dans un état de verrouillage, produit un verrouillage du panneau avant (104) avec le cadre (136, 436) et qui, dans un état de déverrouillage, supprime le verrouillage,
l'unité de commande étant configurée pour effectuer une détection du signal de commande et une vérification de l'information d'authentification, et
l'unité de commande étant configurée pour commander l'unité de verrouillage électromécanique (130, 132),
un changement de l'unité de verrouillage électromécanique (130, 132) de l'état de verrouillage à l'état de déverrouillage n'ayant lieu que lors de la détection du signal de commande et de la vérification réussie de l'information d'authentification,
au moins un élément de verrouillage en forme de tige (178, 180) étant agencé dans une position fixe dans le module de tête (100, 300, 400) et étant en prise avec l'élément de verrouillage actionnable mécaniquement (174, 176, 374, 376) dans l'état de verrouillage,
le panneau avant (104) ne pouvant pivoter par rapport au cadre ou ne pouvant être éloigné du cadre (136, 436) ou ne pouvant être déplacé horizontalement et/ou verticalement par rapport au cadre (136, 436) au moyen d'au moins un rail télescopique que lors d'un déverrouillage de l'au moins un élément de verrouillage actionnable mécaniquement (174, 176, 374, 376) et de l'au moins une unité de verrouillage électromécanique (130, 132), et
l'unité de détection (384) étant configurée pour détecter l'ouverture d'une porte (342) du module de tête (300) et à partir de la détection de l'ouverture de la porte (342), pour émettre le signal de commande et le transmettre à l'unité de commande.

2. Agencement selon la revendication 1, l'unité de commande étant configurée pour déterminer, à partir des informations d'identification, l'autorisation d'un utilisateur d'ouvrir le panneau avant (104).

3. Agencement selon la revendication 1 ou 2, lors d'un actionnement de l'élément de verrouillage actionnable mécaniquement (374, 376) avec un mécanisme de déverrouillage (390), la prise de l'élément de verrouillage en forme de tige (178, 180) avec l'élément de verrouillage actionnable mécaniquement (374, 376) étant détachée, le mécanisme de déverrouillage (390) n'étant accessible à un utilisateur autorisé que lorsque la porte (342) du module de tête (300) est ouverte.

4. Agencement selon l'une quelconque des revendications précédentes, l'unité de verrouillage électromécanique (130, 132) comportant un déverrouillage d'urgence actionnable manuellement, qui peut être actionné à l'aide d'un outil de déverrouillage, un actionnement du déverrouillage d'urgence n'étant possible que lorsque la porte (342) du module de tête (300) est ouverte.

5. Agencement selon l'une quelconque des revendications précédentes, le module de tête (100, 300, 400) comprenant une première unité de verrouillage électromécanique (130) reliée de manière fixe au panneau avant (104) ou au cadre (136, 436) et une deuxième unité de verrouillage électromécanique (122) reliée de manière fixe au panneau avant (104) ou au cadre (136, 436), la deuxième unité de verrouillage électromécanique (132) étant agencée sur un côté du cadre (136, 436) ou du panneau avant (104) opposé à la première unité de verrouillage électromécanique (130).

6. Agencement selon l'une quelconque des revendications précédentes,
le cadre (136, 436) étant intégré dans un boîtier du module de tête (100, 300, 400) ; ou
le cadre (136, 436) étant entouré par le boîtier du module de tête (100, 300, 400).

7. Agencement selon l'une quelconque des revendications précédentes, une unité de manipulation de billets de banque (102) agencée dans le module de tête (100, 300, 400) étant verrouillée avec le cadre (136, 436) dans l'état de verrouillage à l'aide d'une autre
unité de verrouillage électromécanique (14 0), et l'unité de commande étant configurée pour commander l'autre unité de verrouillage électromécanique (140) de telle sorte qu'un changement de l'autre unité de verrouillage électromécanique (140) de l'état de verrouillage à l'état de déverrouillage n'a lieu que lors de la détection du signal de commande et de la vérification réussie de l'information d'authentification.

8. Agencement selon la revendication 7, un changement de l'autre unité de verrouillage électromécanique (140) à l'état déverrouillé n'ayant lieu qu'en présence d'une autre information d'authentification de l'utilisateur.
